(19) **Europäisches Patentamt**

**European Patent Office**

**Office européen des brevets**

(11) Publication number: **0 650 816 A1**

(12) **EUROPEAN PATENT APPLICATION**

(21) Application number: **94116697.7**

(22) Date of filing: **22.10.94**

(51) Int. Cl.⁶: **B29C 45/00**, B29C 67/24, C08L 23/12, //B29K23:00, B29K105:32

(30) Priority: **28.10.93 JP 270136/93**

(43) Date of publication of application: **03.05.95 Bulletin 95/18**

(84) Designated Contracting States: **BE DE FR GB IT NL**

(71) Applicant: **MITSUI TOATSU CHEMICALS, INCORPORATED**
**1-5, Kasumigaseki 3-chome,**
**Chiyoda-ku**
**Tokyo (JP)**

(72) Inventor: **Masuda, Kazuhiko**
**3-42-7, Hirado,**
**Totsuka-ku**
**Yokohama-shi,**
**Kanagawa-ken (JP)**
Inventor: **Yokote, Sachio**
**1-20-25, Kotsubo**
**Zushi-shi,**
**Kanagawa-ken (JP)**
Inventor: **Odaira, Yukio**
**1541, Yabecho,**
**Totsuka-ku**
**Yokohama-shi,**
**Kanagawa-ken (JP)**
Inventor: **Inoue, Norihide**
**3-9-5-533, Nishitoriishi**
**Takaishi-shi,**
**Osaka (JP)**

(74) Representative: **Schüler, Horst, Dr.**
**Patentanwalt,**
**Kaiserstrasse 69**
**D-60329 Frankfurt (DE)**

(54) **Method for injection molding blends of syndiotactic polypropylene and isotactic polypropylene and molded products obtained thereby.**

(57) Described are an injection molding method of a polypropylene resin composition composed of 5 to 95 parts by weight of a syndiotactic polypropylene and 95 to 5 parts by weight of an isotactic polypropylene at a mold temperature of from -5°C to 45°C and molded products obtained by the method. The molded products so obtained have excellent transparency and surface gloss.

## BACKGROUND OF THE INVENTION

1. Field of the Invention

This invention relates to an injection molding method of a polypropylene resin composition and also to a molded product obtained by the method and having excellent transparency and surface gloss.

2. Description of the Related Art

In general, isotactic polypropylene is economical and excellent in mechanical properties, heat resistance, hygienic suitability and water-vapor-permeation resistance and when molded, provides good external appearance, so that it has been used widely for various applications.

Recently, it was found by J.A. Ewen et al. that polypropylene having such high tacticity as exceeding 0.7 in terms of syndiotactic pentad fraction can be obtained using a catalyst composed of aluminoxane and a transition metal compound having an asymmetric ligand (J. Amer. Chem. Soc., 110, 6255-6, 1988). Compared with conventional isotactic polypropylene, this syndiotactic polypropylene is extremely high in transparency and surface gloss and is also excellent in flexibility. The syndiotactic polypropylene is hence expected to develop new application fields to which the conventional isotactic polypropylene cannot be applied. It, however, has not been produced yet on an industrial scale because of some problems unsolved in processability or the like.

Isotactic polypropylene has been used in a variety of fields owing to its excellent properties.

Various types of isotactic polypropylenes are now in use. Among these, crystalline isotactic propylene-ethylene random copolymer has been used as packing materials and the like because it has relatively good transparency and surface gloss. Its transparency and surface gloss, however, are not considered sufficient, leading to a desire for further improvements.

To obtain a molded product having excellent transparency by injection molding of isotactic polypropylene, it is preferred to cool down the molten resin as quickly as possible after it is charged into a mold. Injection molding at a low mold temperature, however, results in a molded product with a defect in shape or external appearance such as a warp, so that an intended molded product cannot be obtained. Accordingly, it is the common practice to obtain a molded product free of a defect in shape or external appearance such as a warp by conducting injection molding with heating the mold to about 50-60°C at the sacrifice of its transparency to some extent.

Syndiotactic polypropylene, on the other hand, is accompanied with the drawback that owing to its lower crystallization rate and crystallinity compared with isotactic polypropylene, its molded product has relatively low stiffness and has slight surface tackiness and can hardly be released from the mold.

## SUMMARY OF THE INVENTION

An object of the present invention is to overcome the above-described drawback, and to provide an improved injection molding method of a polypropylene resin composition and also an injection-molded product obtained by the process and having excellent transparency, surface gloss and molding processability.

With foregoing problems in view, the present inventors have conducted an extensive investigation to provide a method for easily obtaining from a polypropylene resin composition an injection-molded product having excellent transparency and surface gloss. As a result, it has been found that a molded product excellent in transparency and surface gloss can be obtained by injection molding a polypropylene resin composition composed of 5-95 parts by weight of a syndiotactic polypropylene and 95-5 parts by weight of an isotactic polypropylene at a mold temperature of from -5°C to 45°C, leading to the completion of the present invention.

The present invention, therefore, provides an injection molding method, which comprises injection molding a polypropylene resin composition composed of 5-95 parts by weight of a syndiotactic polypropylene and 95-5 parts by weight of an isotactic polypropylene at a mold temperature of from -5°C to 45°C and also an injection-molded product obtained by the above method and having a gloss of at least 88 as measured at an incidence angle of 60°.

## BRIEF DESCRIPTION OF THE DRAWING

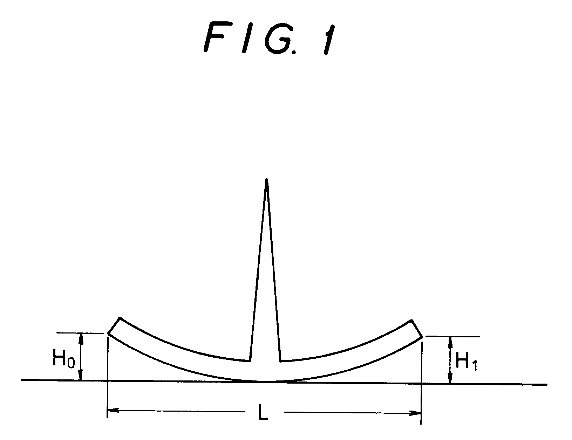

FIG. 1 schematically illustrates a warp measuring method for the determination of a warp rate in a molded disc after the disc has been conditioned at 23°C for 24 hours.

In the drawing, $H_0$ and $H_1$ indicate the warp rates in the molded disc from a horizontal plane as measured at antipodal positions of the disc.

## DETAILED DESCRIPTION OF THE PREFERRED EMBODIMENTS

Examples of a catalyst suitable for use in the production of a syndiotactic polypropylene useful in the present invention include catalysts composed of a cocatalyst and a bridged transition metal compound having an asymmetric ligand such as those disclosed, for example, in Japanese Patent Laid-open Nos. 41303/1990, 41305/1990, 274703/1990, 274704/1990, 179005/1991 (corresponding to U.S. Patent Nos. 5,155,080 and 5,225,500), 179006/1991 and 69394/1994. Catalysts even having a different structure can still be used insofar as they make it possible to provide a polypropylene having a syndiotactic pentad fraction of at least 0.7 as measured by $^{13}$C-NMR. Slurry polymerization, bulk polymerization and vapor phase polymerization can all be employed for the polymerization.

Illustrative of a syndiotactic polypropylene usable in the present invention include propylene homopolymers having a syndiotactic structure and/or copolymers of propylene and ethylene or an α-olefin. In addition, copolymers containing a small amount of an olefin such as cyclopentene or norbornene or a diene such as hexadiene, octadiene, decadiene, dicyclopentadiene or 5-ethylidene-2-norbornene can also be used as the syndiotactic polypropylene. Such copolymers can each be obtained by copolymerizing propylene and a small amount of a comonomer in the presence of the above-described known catalyst capable of providing a poly-α-olefin having good syndiotacticity.

Examples of the α-olefin usable in the present invention include $C_{4-25}$ α-olefins such as 1-butene, 1-hexene, 1-pentene, 1-decene and 1-hexadecene. Two or more comonomers selected from ethylene and these α-olefins can also be used in combination.

The syndiotactic propylene homopolymer useful in the present invention preferably has a syndiotactic pentad fraction of at least 0.7, with at least 0.75 being particularly preferred. The syndiotactic pentad fraction is calculated in accordance with the method disclosed in U.S. Patent No. 4,892,851 and it is the ratio of the peak of methyl groups derived from the syndiotactic pentad structure, said peak being observed around 20.2 ppm, to the sum of the peaks of all methyl groups as measured at 135°C in trichlorobenzene by $^{13}$C-NMR while using tetramethylsilane as a standard. When a syndiotactic propylene copolymer is used in the present invention, the syndiotactic pentad fraction of propylene chains, which is calculated as a ratio of the intensity of a peak observed around 20.2 ppm to the intensity of a peak derived from methyl groups of all propylene chains as measured similarly by $^{13}$C-NMR, is at least 0.3, with at least 0.5 being particularly preferred.

The molecular weight of the syndiotactic polypropylene falls within a range of from 0.1 to 10 dℓ/g, preferably from 0.5 to 5.0 dℓ/g in terms of intrinsic viscosity measured in a tetralin solution at 135°C and within a range of from 0.1 to 100 in terms of MFI (melt flow index: ASTM D-1238).

Any of known propylene homopolymers, propylene-ethylene block copolymers and crystalline propylene-ethylene random copolymers, which are all available on the market, can be used as the isotactic polypropylene in the present invention. Use of a crystalline propylene-ethylene random copolymer or a polypropylene homopolymer among them makes it possible to provide an injection-molded product excellent in transparency. When transparency is of primary importance, use of a crystalline propylene-ethylene random copolymer is recommended. When the processability is important, on the other hand, use of a propylene homopolymer is recommended.

As crystalline propylene-ethylene random copolymers having an isotactic structure, those having an ethylene content of 1-5 wt.%, preferably 2-4 wt.% are preferred.

In addition, an isotactic polypropylene available from the use of a catalyst composed mainly of a so-called metallocene compound as described, for example, in Japanese Patent Laid-Open Nos. 130314/1986 and 12406/1991 can also be used.

The molecular weight of the isotactic polypropylene to be added may be in a range of from 0.1 to 10 dℓ/g, preferably from 0.5 to 5.0 dℓ/g in terms of intrinsic viscosity measured in a tetralin solution at 135°C and in a range of from 0.1 to 100 in terms of MFI (melt flow index: ASTM D-1238). It is generally preferred to use an isotactic polypropylene whose MFI is close to that of the syndiotactic polypropylene to be employed in combination.

The melting temperature for the resin upon molding may be in a range of from 160°C to 260°C, so that a temperature which is adopted upon molding a usual isotactic polypropylene can be selected. Upon this selection, the melting temperature is set depending on the MFI of the main component.

To prevent the isotactic polypropylene or syndiotactic polypropylene, whichever added in a small amount, from becoming a cause for a granular structure or the like, it is desired to use as the isotactic polypropylene or syndiotactic polypropylene one having an MFI at least 0.5 times as high as, preferably equal to or higher than the MFI of the polypropylene as the main component.

In the present invention, a polypropylene resin composition comprising 5-95 parts by weight of the syndiotactic polypropylene and 95-5 parts by weight of the isotactic polypropylene can be used. Their mixing proportions can be selected suitably according to the intended physical properties of the molded product. For instance, when the transparency is regarded important, it is desired to choose a greater proportion for the syndiotactic polypropylene. To improve the processability of the syndiotactic polypropylene resin, it is desired to choose the proportion of the syndiotactic polypropylene from a range of 95-50 parts by weight, preferably 90-60 parts by weight, more preferably 85-65 parts by weight. To improve the transparency and/or gloss of the isotactic polypropylene resin, on the other hand, it is desired to choose the proportion of the isotactic polypropylene from a range of 95-50 parts by weight, preferably 90-60 parts by weight, more preferably 85-65 parts by weight.

To the resin composition useful in the practice of the present invention, it is possible to add, as needed, various additives such as an antiblocking agent, a lubricant, a nucleating agent, an ultraviolet light absorber, a heat stabilizer, a weathering stabilizer, a radiation-resisting agent, a pigment and a dye.

In the method according to the present invention, it is also possible to improve physical properties such as the impact resistance by adding one or more of various elastomers such as propylene-ethylene copolymer rubbers, ethylene-propylene-diene copolymer rubbers, ethylene-butene copolymer rubbers, propylene-butene copolymer rubbers and styrene-diene block copolymer rubbers, and hydrogenated rubbers thereof; and resins such as low-density polyethylene, high-density polyethylene and linear low-density polyethylene.

The resin composition useful in the practice of the present invention can be prepared by mixing a syndiotactic polypropylene and an isotactic polypropylene and optionally, a known stabilizer and/or known additives in a mixer such as Henschel mixer, melting and kneading these components in an extruder and then granulating the resulting melt. As an alternative, hot rolls, a Banbury mixer, a pressure kneader or a Brabender blender can be employed. It is also possible, as an alternative, that the syndiotactic polypropylene and isotactic polypropylene are separately granulated into pellets in an extruder or the like and they are blended together upon molding.

Blending of the syndiotactic polypropylene with isotactic polypropylene as in the present invention leads to a significant increase in the crystallization rate of the syndiotactic polypropylene shows a drastic increase and hence to improved moldability. The injection-molded product according to the present invention can be easily produced by pelletizing the above resin composition and then injection molding the resultant pellets at a mold temperature of from -5°C to 45°C or lower, preferably from 5°C to 40°C or lower, more preferably from 5°C to 35°C and most preferably from 5°C to 25°C. Unlike injection molding of isotactic polypropylene alone, the injection-molded products so produced is free of a defect in shape or external appearance such as a warp, and moreover, has excellent transparency. As to other molding conditions including an injection molding machine, those known for use with isotactic polypropylene can be used as are.

Where the mold temperature is lower than room temperature, it is preferred to feed dry air to and around the mold to avoid wetting of the mold with dew.

An injection-molded product having desired transparency, surface gloss and mechanical properties can be obtained by changing the mixing ratio of the syndiotactic polypropylene to the isotactic polypropylene. Furthermore, an injection-molded product of a resin composition composed mainly of the syndiotactic polypropylene has extremely high transparency and surface gloss compared with an injection-molded product of a conventional crystalline isotactic propylene-ethylene random copolymer.

The injection-molded product according to the present invention is less whitish opaque and has crystal transparency compared with those of conventional isotactic polypropylene so that it has extremely high commercial value, for example, as a packaging or medical material, a "Tupperware" (trade mark) for food, or a syringe.

The present invention will hereinafter be described in further detail by examples. It is, however, to be noted that the present invention is not limited to them. Incidentally, measurements in each example were conducted according to the following methods. Measured values are shown in Table 1.

(1) Melt flow index: ASTM D-1238 was followed.

4

(2) Total haze: ASTM-D-1003 was followed.

(3) Internal haze: The Mitsui Toatsu Chemicals' method was followed (the haze of a sample is measured in accordance with ASTM-D-1003 after coating both sides of the sample with a 1:1 mixture of liquid paraffin and toluene).

(4) Gloss: ASTM D-523 (incidence angle: 60°) was followed.

(5) Warp rate: A disc-shaped sample of 120 mm in diameter and 2 mm in thickness was produced at a gate diameter of 3 mm by injection molding. After the sample was conditioned at 23°C for 24 hours, warps $H_0$ and $H_1$ (see FIG. 1) and the diameter L of the sample were measured and the warp rate of the sample was then calculated in accordance with the following equation:

$$\text{Warp rate (\%)} = 100 \ (H_0 + H_1) \ / \ 2L$$

## Example 1

A 16-ℓ dry stainless-steel autoclave was purged with nitrogen, in which 10 ℓ of liquefied propylene were then charged. Also charged were 30 mℓ of a solution of methylalminoxane in toluene (Al: 40 mmol, average polymerization degree of methylaluminoxane: 20), followed by stirring for 15 minutes. On the side and in parallel with the above procedures, 12.4 mg of diphenylmethylene-(9-fluorenyl)(cyclopentadienyl)-zirconium dichloride were dissolved in 15 mℓ of a solution of methylaluminoxane in toluene (Al: 20 mmol, average polymerization degree of methylaluminoxane: 20). The latter solution was charged in the autoclave, followed by the addition of hydrogen. The autoclave was heated to 70°C, at which polymerization was conducted for one hour. The autoclave was then opened, whereby 2.3 kg of syndiotactic polypropylene were obtained. The intrinsic viscosity of the syndiotactic polypropylene so obtained as measured in a tetralin solution at 135°C was 1.39 dℓ/g, its melt flow index (which will hereinafter be abbreviated as "MFI") 3.2 g/10 min., its peak crystallization point as measured by a differential scanning calorimeter 74.6°C and its syndiotactic pentad fraction as measured by $^{13}$C-NMR 0.787. Eighty parts by weight of the syndiotactic polypropylene (H-SPP) and 20 parts by weight of an isotactic homopolypropylene ("JHH-G", trade name, product of Mitsui Toatsu Chemicals, Inc., intrinsic viscosity: 1.6 dℓ/g, MFI: 8 g/10 min) were blended, followed by injection molding at a barrel temperature of 210°C and a mold temperature of 25°C through an injection molding machine ("PLASTAR TI-80G2"; product of Toyo Machinery & Metal Co., Ltd.; mold clamping pressure: 80 t). The molded product so obtained was cooled for 15 seconds, whereby a 170 x 80 x 2 mm sheet was obtained. The sheet had high transparency and surface gloss, and no defect in shape or external appearance, such as a warp, was observed thereon. A disc-shaped sample obtained by injection molding under similar conditions had a warp rate of 0.7%.

## Comparative Example 1

The isotactic homopolypropylene, "JHH-G", was injection molded as in Example 1. The molded product contained a warp, thereby failing to provide a product of the intended shape. A disc-shaped sample obtained by the injection molding under similar conditions had a warp rate of 1.8%.

## Example 2

Eighty parts by weight of the syndiotactic homopolypropylene "H-SPP" and 20 parts by weight of a crystalline isotactic propylene-ethylene random copolymer ("GFL-G", trade name; product of Mitsui Toatsu Chemicals, Inc.; intrinsic viscosity: 1.5 dℓ/g, MFI: 9 g/10 min, ethylene content: 3.1 wt.%) were blended, followed by injection molding in a similar manner to Example 1. The molded product so obtained had high transparency and surface gloss and no defect in shape or external appearance, such as a warp, was observed. A disc-shaped sample obtained by injection-molding under similar conditions had a warp rate of 0.6%.

## Example 3

Twenty parts by weight of the syndiotactic homopolypropylene "H-SPP" and 80 parts by weight of the crystalline isotactic propylene-ethylene random copolymer, "GFL-G" were blended, followed by injection molding in a similar manner to Example 1. Compared with a molded product of the crystalline isotactic propylene-ethylene random copolymer alone, the molded product so obtained had higher transparency and no defect in shape or external appearance, such as a warp, was observed. A disc-shaped sample obtained by injection molding under similar conditions had a warp rate of 1.1%.

Comparative Example 2

In a similar manner to Example 1, the crystalline isotactic propylene-ethylene random copolymer, "GFL-G", was injection-molded. The molded product contained a warp, thereby failing to provide a product of the intended shape. A disc-shaped sample obtained by injection molding under similar conditions had a warp rate of 2.0%.

Comparative Example 3

In a similar manner to Example 1 except that the mold temperature was raised to 50°C, injection molding was conducted to obtain a sheet. The sheet so obtained was good in surface gloss and shape, but was inferior in transparency to that obtained in Example 1. A disc-shaped sample obtained by injection molding under similar conditions had a warp rate of 0.5%.

Comparative Example 4

In a similar manner to Comparative Example 1 except that the mold temperature was raised to 50°C, injection-molding was performed. The sheet so obtained was free of a warp but had extremely poor transparency. It was good in surface gloss and shape but compared with that obtained in Example 1, was inferior in transparency. A disc-shaped sample obtained by injection molding under similar conditions had a warp rate of 1.0%.

Comparative Example 5

In a similar manner to Example 1 except that only the syndiotactic homopolypropylene, "H-SPP" was used as polypropylene, experiments were repeated. It was, however, impossible to release the molded products from the mold because the 15-seconds cooling of the mold was insufficient for solidification. When the cooling time was increased to 100 seconds, it was possible to release some of molded products from the mold but none of them were fully released.

Compared with the single use of syndiotactic polypropylene, the polypropylene resin composition according to the present invention has considerably better moldability and can hence be molded easily. The injection-molded product according to the present invention has extremely high transparency and surface gloss compared with injection-molded products available from conventional isotactic polypropylene. It can therefore be used for various applications to which conventional polypropylene are not applicable.

Table 1

| Unit | H-SPP Parts by weight | JHH-G Parts by weight | GFL-G Parts by weight | Mold temperature °C | Total haze % | Internal haze % | Gloss % | Warp rate % |
|---|---|---|---|---|---|---|---|---|
| Ex. 1 | 80 | 20 | | 25 | 15.0 | 13.2 | 100 | 0.7 |
| Comp.Ex.1 | | 100 | | 25 | 84.3 | 83.9 | 80 | 1.8 |
| Ex. 2 | 80 | | 20 | 25 | 9.9 | 8.0 | 100 | 0.6 |
| Comp.Ex.2 | | | 100 | 25 | 54.2 | 53.6 | 85 | 2.0 |
| Ex. 3 | 20 | | 80 | 25 | 41.3 | 38.5 | 90 | 1.1 |
| Comp.Ex.3 | 80 | 20 | | 50 | 22.3 | 21.5 | 100 | 0.5 |
| Comp.Ex.4 | | 100 | | 50 | 88.6 | 87.8 | 82 | 1.0 |
| Comp.Ex.5 | 100 | | | 25 | | | | |

None of the molded products obtained in Comparative Example 5 permitted evaluation due to the inferior moldability of the resin employed herein.

## Claims

1.  An injection molding method, which comprises injection molding a polypropylene resin composition composed of 5 to 95 parts by weight of a syndiotactic polypropylene and 95 to 5 parts by weight of an isotactic polypropylene at a mold temperature of from -5 ° C to 45 ° C.

EP 0 650 816 A1

2. A method according to claim 1, wherein the mold temperature is in a range of from 5°C to 45°C.

3. A method according to claim 1, wherein the mold temperature is in a range of from 5°C to 35°C.

4. An injection-molded product which has been obtained by the method according to claim 1 and has a gloss of at least 88 as measured at an incidence angle of 60°.

5. A method according to claim 1, wherein the polypropylene resin composition is composed of 60 to 90 parts by weight of the syndiotactic polypropylene and 40 to 10 parts by weight of the isotactic polypropylene.

6. A method according to claim 1, wherein the polypropylene resin composition is composed of 65 to 85 parts by weight of the syndiotactic polypropylene and 35 to 15 parts by weight of the isotactic polypropylene.

7. An injection-molded product which has been obtained by the method according to claim 5 and has a gloss of at least 99 as measured at an incidence angle of 60°.

8. An injection-molded product which has been obtained by the method according to claim 6 and has a gloss of at least 99 as measured at an incidence angle of 60°.

9. A method according to claim 1, wherein the polypropylene resin composition is composed of 10 to 40 parts by weight of the syndiotactic polypropylene and 90 to 60 parts by weight of the isotactic polypropylene.

10. An injection-molded product which has been obtained by the method according to claim 9 and has a gloss of at least 88 as measured at an incidence angle of 60°.

8

# F I G. 1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 428 972 (MITSUI TOATSU CHEMICALS, INCORPORATED) * page 4, line 1 - line 6; claims 1,2,5,6; examples 3,5 * | 1-8 | B29C45/00 B29C67/24 C08L23/12 //B29K23:00, B29K105:32 |
| E | EP-A-0 622 410 (BECTON DICKINSON AND COMPANY) * page 2, line 55 - page 3, line 52; claims 1-10; examples 4,5 * | 1-10 | |
| A | EP-A-0 466 926 (MITSUI TOATSU CHEMICALS, INCORPORATED) * page 3, line 45 - line 53 * * page 4, line 1 - line 6 * | 1,5,6 | |
| A | EP-A-0 451 743 (MITSUI TOATSU CHEMICALS INC.) * examples 1,13 * | 1,5,6 | |
| A | US-A-3 268 627 (DONALD D. EMRICK) * column 2, line 65 - line 68; claims 1,2,6,7 * | 1,5,6,9 | TECHNICAL FIELDS SEARCHED (Int.Cl.6) B29C C08L |

The present search report has been drawn up for all claims

| Place of search | Date of completion of the search | Examiner |
|---|---|---|
| THE HAGUE | 7 February 1995 | Van Nieuwenhuize, O |